# EUROPÄISCHE PATENTANMELDUNG

(11) **EP 2 382 953 A2**
(43) Veröffentlichungstag der Anmeldung: **02.11.2011**
(21) Anmeldenummer: 11156277.3
(22) Anmeldetag: 28.02.2011
(51) Int. Cl.: A61G 5/06

(54) **Treppensteigvorrichtung**

(30) Priorität: 27.04.2010 DE 102010016655; 23.09.2010 DE 102010037729
(71) Anmelder: Ulrich Alber GmbH, 72461 Albstadt-Tailfingen (DE)
(72) Erfinder: Bitzer, Paul-Gerhard, 72461 Albstadt (DE); Scheck, Franz, 72336 Balingen (DE); Urso, Michael, 78532 Tuttlingen (DE); Hantke, Wolfgang, 88255 Baindt (DE)
(74) Vertreter: Staudt, Hans-Peter

(57) **Zusammenfassung**

Die Erfindung betrifft eine Treppensteigvorrichtung mit einer Trägereinheit, einer motorisch angetriebenen Steigeinheit und einer Steuereinheit zum Steuern des Betriebs der Steigeinheit, wobei eine Detektionseinheit zum Detektieren der aktuellen Position der Trägereinheit in Bezug auf eine oder mehrere Stufen der Treppe vorgesehen ist, welche mindestens einen berührungslosen Sensor aufweist, wobei die Detektionseinheit Signale an die Steuereinheit abgibt, die Informationen über die aktuelle Position der Trägereinheit in Bezug auf eine oder mehrere Stufen der Treppe enthalten und wobei die Steuereinheit dazu ausgelegt ist, den Betrieb der Steigeinheit in Abhängigkeit von Signalen der Detektionseinheit zu steuern.

## Beschreibung

Die Erfindung betrifft eine Treppensteigvorrichtung, beispielsweise für Rollstühle, mit einer Trägereinheit und einer mit der Trägereinheit verbundenen Steigeinheit, wobei die Steigeinheit mindestens ein Steigelement aufweist, das durch einen Antriebsmotor antreibbar und so ausgebildet ist, dass es mit dem Auftritt der jeweils nächstgelegenen Stufe einer Treppe in Berührung gelangen und die Treppensteigvorrichtung auf die nächstgelegene Stufe heraufheben oder absenken kann, und mit einer Steuereinheit zum Steuern des Betriebs der Steigeinheit.

Eine derartige Treppensteigvorrichtung ist beispielsweise aus der DE 199 12 932 C1 bekannt.

Neben dem speziellen Anwendungsgebiet der erfindungsgemäßen Treppensteigvorrichtung für Rollstühle umfasst die Erfindung beliebige andere Treppensteigvorrichtungen, die mit oder ohne externe Bedienpersonen zum Transportieren von Lasten oder Personen auf Treppen geeignet sind.

Treppen sind insbesondere für Rollstuhlfahrer und Gehbehinderte ein allgegenwärtiges Problem. Eine Treppensteigvorrichtung der eingangs genannten Art ermöglicht es beispielsweise, dass Hilfspersonen einen Rollstuhlfahrer oder Gehbehinderten ohne nennenswerte körperliche Anstrengung allein mit Hilfe dieser Treppensteigvorrichtung eine Treppe hinauf oder hinab befördern können. Hierzu wird der Rollstuhl mit einer geeigneten Vorrichtung an der Trägereinheit befestigt, sofern nicht die Trägereinheit selbst als Stuhl ausgebildet ist, und die Treppensteigvorrichtung wird zusammen mit dem Rollstuhl an die unterste Stufe herangefahren. Die Hilfsperson kippt nunmehr die Treppensteigvorrichtung mit angebrachtem Rollstuhl zu sich ins Gleichgewicht. Bei Erreichen der idealen Kippstellung verspürt die Hilfsperson nur noch einen minimalen Druck nach vorne beziehungsweise nach hinten. Bei Betätigung der Steigeinheit der Treppensteigvorrichtung gelangt nunmehr ein Steigelement mit dem Auftritt der nächstgelegenen Stufe in Berührung und hebt die Treppensteigvorrichtung auf die nächstgelegene Stufe herauf. Dieser Vorgang wird so oft wiederholt, bis die Treppensteigvorrichtung auf der obersten Stufe der Treppe angelangt ist. Das Abwärtssteigen einer Treppe erfolgt analog in gleicher Weise.

Herkömmliche Treppensteigvorrichtungen weisen den Nachteil auf, dass der Steigvorgang relativ ruckartig erfolgt. Eine Bedienperson muss somit während des Steigvorgangs Lastwechselreaktionen ausgleichen, die wegen ihres schnellen, das heißt innerhalb einer kurzen Zeitspanne erfolgenden Auftretens deutlich spürbar sind.

Die aus der DE 199 12 932 C1 bekannte Treppensteigvorrichtung begegnet diesem Problem damit, dass die Steigeinheit mit unterschiedlichen Antriebsgeschwindigkeiten betreibbar ist, wobei die Antriebsgeschwindigkeit kurz vor dem Aufsetzen eines Steigelements auf den Auftritt der nächstgelegenen Stufe gegenüber einer ersten vorbestimmten Antriebsgeschwindigkeit reduzierbar ist, so dass ein weiches Aufsetzen erreicht wird, und nach dem Aufsetzen auf die nächstgelegene Stufe wieder auf die erste vorbestimmte Antriebsgeschwindigkeit erhöht wird.

Auch bei dieser bezüglich ihrer Sicherheitsmerkmale erheblich verbesserten Treppensteigvorrichtung können jedoch Bedienungsfehler nicht ausgeschlossen werden. Ein Bedienungsfehler kann darin bestehen, dass der Steigvorgang von der Bedienperson ausgelöst wird, wenn die Treppensteigvorrichtung eine ungeeignete Stellung einnimmt. Eine derartige ungeeignete Stellung kann beispielsweise darin bestehen, dass sich die Treppensteigvorrichtung zu weit von der nächstgelegenen Stufe entfernt befindet oder eine zu große Schrägstellung zur Stufenkante aufweist.

Aus der DE 297 21 477 U1 ist eine Treppensteigvorrichtung bekannt, die so ausgeführt ist, dass sie stets gleichzeitig auf zwei Treppenstufen steht, und zwar entweder auf der jeweils nächsten Treppenstufe oder, bei engeren und gewundenen Treppen, auf der jeweils übernächsten Treppenstufe. Hierdurch soll die die Treppensteigvorrichtung bedienende Person kräftemäßig weitestgehend entlastet werden, so dass sie nur noch Führungs- und Lenkungsaufgaben übernehmen muss. Dieses bekannte Prinzip soll es sogar ermöglichen, eine führerlose Treppensteigvorrichtung zu bauen.

Bei dieser bekannten Treppensteigvorrichtung können an der Rückseite, jeweils links und rechts, Tastfühler in Form von Kontaktleisten angebracht sein, die beim Anstehen an der nächsthöheren Treppenkante betätigt werden und hierdurch die Antriebsquelle für den nächsten Steighub aktivieren.

Zudem können an Hubelementen Tastsensoren angeordnet sein, die sicherstellen, dass jeder Hubschritt von einer definierten Position der Hubmechanik aus beginnt und an einer definierten Position endet.

Der Steigvorgang dieser vorbekannten Treppensteigvorrichtung verläuft praktisch ohne funktionsbedingte Kippbewegungen. Er verfügt zudem über Steigmittel, die während des Betriebs keine Verschiebung auf der Treppenstufe ermöglichen. Die Steigmittel sind allerdings äußerst aufwendig. Zudem sind derartige kontinuierlich über mehrere Stufen in Eingriff befindliche Steigsysteme, die einen raupenartigen Steigvorgang bewirken, hinsichtlich bestimmter Treppengeometrien problematisch, insbesondere bei Wendeltreppen, und weisen zudem ein großes Bauvolumen auf.

Steigvorrichtungen der eingangs genannten Art gemäß der DE 199 12 932 C1 weisen demgegenüber den Vorteil erhöhter Flexibilität hinsichtlich der Treppengeometrie auf, da sie auch nach Einleiten des Steigvorgangs noch auf der Treppenstufe verfahren werden können.

Der Erfindung liegt das technische Problem zugrunde, eine gattungsgemäße Treppensteigvorrichtung dahingehend zu verbessern, dass bei einer Fehlbedienung der vorstehend erläuterten Art Sicherheitsprobleme vermieden werden.

Die Lösung dieses technischen Problems ist in Patentanspruch 1 angegeben. Vorteilhafte Ausgestaltungen der Erfindung sind in den Unteransprüchen beschrieben.

Erfindungsgemäß weist die Treppensteigvorrichtung gemäß dem Oberbegriff des Patentanspruchs 1 eine Detektionseinheit zum Detektieren der aktuellen Position der Trägereinheit in Bezug auf eine oder mehrere Stufen der Treppe auf, wobei die Detektionseinheit mindestens einen berührungslosen Sensor aufweist. Die Detektionseinheit gibt Signale an die Steuereinheit ab, welche Informationen über die aktuelle Position der Trägereinheit in Bezug auf eine oder mehrere Stufen der Treppe enthalten. Die Steuereinheit ist dazu ausgelegt, den Betrieb der Steigeinheit in Abhängigkeit von Signalen der Detektionseinheit zu steuern.

Beispielsweise kann die Steuereinheit dazu ausgelegt sein, in Abhängigkeit von Signalen der Detektionseinheit die Einleitung oder Fortführung des Steigvorgangs zu verhindern und/oder den Steigvorgang zu unterbrechen. Hierbei kann sie die Einleitung oder Fortführung des Steigvorgangs verhindern und/oder den Steigvorgang unterbrechen, wenn mittels der Detektionseinheit eine ungeeignete Stellung der Trägereinheit in Bezug auf die Treppe detektiert wird, und eine Einleitung oder Fortführung des Steigvorgangs zulassen, wenn mittels der Detektionseinheit eine geeignete Stellung der Trägereinheit detektiert wird.

Die Steuereinheit kann auch dazu ausgelegt sein, in Abhängigkeit von Signalen der Detektionseinheit eine Fahrtrichtung für den Steigvorgang zu erkennen und/oder die Einleitung des Steigvorgangs selbsttätig auszulösen. Sie kann hierzu erkennen, ob die Treppensteigvorrichtung an das vordere Ende einer Stufe gefahren wurde, so dass die Fahrtrichtung als treppab zu erkennen ist. In diesem Fall kann sie beispielsweise bei einer Auslösung eines Fahrsignals eines Benutzers durch Betätigung einer entsprechenden Taste an einer Bedieneinheit selbsttätig die Richtung treppab wählen und den Betrieb der Steigeinheit entsprechend ansteuern. In gleicher Weise kann die Treppensteigvorrichtung erkennen, ob die Treppensteigvorrichtung an das hintere Ende einer Stufe gefahren wurde, so dass die Fahrtrichtung als treppauf zu erkennen ist. In diesem Fall kann sie dann bei einer Auslösung eines Fahrsignals durch den Benutzer durch Betätigung der entsprechenden Taste an der Bedieneinheit selbsttätig die Richtung treppauf wählen und den Betrieb der Steigeinheit entsprechend ansteuern.

In beiden Fällen kann in einer entsprechenden Ausführungsform die Richtungswahl des Steigvorgangs beibehalten und erst wieder mit Erreichen einer Neutralstellung erneut abgefragt beziehungsweise ermittelt werden.

In einer entsprechenden Ausführungsform kann die Steuereinheit dazu ausgelegt sein, in Abhängigkeit von Signalen der Detektionseinheit die Einleitung des Steigvorgangs selbsttätig auszulösen. Wenn sie erkennt, dass die Treppensteigvorrichtung an das vordere Ende einer Stufe gefahren wurde, so dass die Fahrtrichtung als treppab zu erkennen ist, kann sie einen Steigvorgang in Richtung treppab selbsttätig auslösen und den Betrieb der Steigeinheit entsprechend ansteuern.

In gleicher Weise kann die Treppensteigvorrichtung in Abhängigkeit von Signalen der Detektionseinheit die Einleitung des Steigvorgangs treppauf selbsttätig auslösen. Wenn sie erkennt, dass die Treppensteigvorrichtung an das hintere Ende einer Stufe gefahren wurde, so dass die Fahrtrichtung als treppauf zu erkennen ist, kann sie einen Steigvorgang in Richtung treppauf selbsttätig auslösen und den Betrieb der Steigeinheit entsprechend ansteuern.

Es versteht sich, dass ein derartiger Betrieb einer Treppensteigvorrichtung vorzugsweise in Zusammenwirken mit weiteren Sicherheitsabfragen, beispielsweise bezüglich der exakten und richtigen Positionierung der Treppensteigvorrichtung, erfolgt.

Es versteht sich zudem, dass eine derartige selbsttätige Auslösung des Steigvorgangs vorzugsweise als separat wählbares oder zuschaltbares Merkmal ausgeführt ist, das je nach örtlicher Gegebenheit oder Wunsch des Benutzers aktiviert oder deaktiviert werden kann.

Die Steuereinheit kann auch dazu ausgelegt sein, die Betätigungsgeschwindigkeit der Steigeinheit in Abhängigkeit von Signalen der Detektionseinheit zu steuern. So kann beispielsweise die Betätigungsgeschwindigkeit der Steigeinheit verlangsamt werden, wenn eine nicht optimal sichere Position der Trägereinheit in Bezug auf die Treppe detektiert wird, um der Bedienperson mehr Zeit zu geben, die Position zu optimieren oder auf diesbezügliche Folgen zu reagieren.

Zudem kann die Steuereinheit dazu ausgelegt sein, die Betätigungsrichtung der Steigeinheit in Abhängigkeit von Signalen der Detektionseinheit umzukehren. Auch hierdurch kann der Bedienperson eine Korrektur erleichtert oder gegebenenfalls eine Gefahr abgewendet werden.

Durch die Bereitstellung eines oder mehrerer berührungsloser Sensoren an der Trägereinheit selbst kann deren Position in Bezug auf die Treppenstufen vor und während des Steigvorgangs kontinuierlich ermittelt werden, und zwar insbesondere auch in solchen Positionen, in denen die Trägereinheit nicht mit der Treppe in Berührung steht. Dies ermöglicht entsprechende Freiheitsgrade bei der Auslegung der Steigelemente.

Den mit nicht kontinuierlich, sondern zyklisch arbeitenden Steigelementen verbundenen Sicherheitsproblemen trägt die erfindungsgemäße Treppensteigvorrichtung dadurch Rechnung, dass der Steigvorgang unterbrochen werden beziehungsweise die Einleitung oder Fortführung des Steigvorgangs verhindert werden kann, wenn die Trägereinheit in Bezug auf die Treppe eine ungeeignete Stellung aufweist. Hierdurch werden Korrekturen der Positionen der Treppensteigvorrichtung während des Steigvorgangs, die beispielsweise bei eng gewundenen Treppen erforderlich sein können, ermöglicht, ohne dass bei einer unsachgemäßen Korrektur und entsprechend ungeeigneter Stellung des Steigvorgangs eine Sturzgefahr auftritt. Auch die weiteren möglichen Eingriffsmöglichkeiten der Steuereinheit tragen dem Rechnung.

Grundsätzlich besteht die Möglichkeit, lediglich einen berührungslosen Sensor zu verwenden. Hierbei kann vorzugsweise ein solcher berührungsloser Sensor verwendet werden, der in mehreren Richtungen abtasten kann.

Bei einer bevorzugten Ausführungsform der Erfindung kann die Detektionseinheit mindestens drei, vorzugsweise vier berührungslose Sensoren aufweisen. Diese können vorzugsweise in einem zentralen Bereich der Trägereinheit angebracht sein. Durch eine vorteilhafte Verknüpfung der Signale der berührungslosen Sensoren kann erreicht werden, dass unerwünschte Schiefstellungen der Trägereinheit gegenüber der Stufenkante detektiert werden, obwohl lediglich mittig Sensoren angebracht sind. Hierdurch wird die Bereitstellung von jeweils zwei Sensoren in Breitenrichtung, beispielsweise im Bereich der Außenkanten der Trägereinheit, überflüssig gemacht.

Vorzugsweise ist im vorderen Bereich der Trägereinheit ein erster berührungsloser Sensor angeordnet, dessen Detektionsrichtung vertikal nach unten verläuft. Dieser erste berührungslose Sensor dient insbesondere dazu, die richtige Position der Trägereinheit in Bezug auf die vordere Stufenkante sicherzustellen. Dies betrifft nicht nur den Abstand zur vorderen Stufenkante, sondern auch die Schrägstellung, wobei unter Schrägstellung hier der Winkel zur Stufenkante gemeint ist, das heißt ein Winkel in der Horizontalen, während der Winkel in der Vertikalen in diesem Zusammenhang als Neigungswinkel bezeichnet wird.

Der zweite berührungslose Sensor ist vorzugsweise an der Unterseite der Trägereinheit angeordnet. Seine Detektionsrichtung verläuft horizontal.

Die Begriffe "vorne", "hinten", "oben" und "unten" beziehen sich bei der vorliegenden Anmeldung auf die Betriebsposition der Treppensteigvorrichtung auf der Treppe. Mit "vorne" wird hierbei die Richtung bezeichnet, die treppab gewandt ist, während "hinten" die treppauf gewandte Richtung meint. Auch Begriffe wie "oben", "unten", "horizontal" und "vertikal" gehen von der Betriebsstellung der Treppensteigvorrichtung auf einer Treppe aus. Es versteht sich, dass hierbei eine gewisse Bandbreite von Winkelgraden umfasst ist, da die Treppensteigvorrichtung während des Betriebs auf der Treppe in ihrem Neigungswinkel nicht konstant bleibt.

Der in horizontaler Richtung detektierende zweite berührungslose Sensor kann den Abstand zur Tritt- oder Setzstufe, das heißt zu dem senkrechten Bauteil zwischen zwei Stufen, erfassen. Wenn während des Steigvorgangs diesbezüglich eine sprunghafte Veränderung auftritt, kann bei entsprechender logischer Verknüpfung daraus ermittelt werden, dass die Trägereinheit eine Höhe erreicht hat, die oberhalb der Trittfläche der nächsthöher gelegenen Stufe liegt.

Ein dritter berührungsloser Sensor kann im hinteren Bereich der Trägereinheit angeordnet sein und eine vertikal nach unten verlaufende Detektionsrichtung aufweisen. Mittels dieses dritten berührungslosen Sensors kann insbesondere festgestellt werden, ob sich die Trägereinheit bei Einleitung des Steigvorgangs in Richtung Aufwärtsfahrt ausreichend nahe an der nächsthöheren Stufe befindet.

Ein vierter berührungsloser Sensor mit ebenfalls vertikal nach unten verlaufender Detektionsrichtung kann ebenfalls im hinteren Bereich der Trägereinheit angeordnet sein, jedoch vorzugsweise unterhalb und vor dem dritten berührungslosen Sensor. Dieser vierte berührungslose Sensor kann insbesondere dann, wenn zwei beidseitig angeordnete Steigelemente in Parallelbewegung einen Steigvorgang bewirken, vermeiden, dass infolge Schrägstellung der Trägereinheit zur Stufenkante nur eines der Steigelemente auf der nächsthöheren Stufe aufsetzen würde. In diesem Falle würde erfindungsgemäß der Steigvorgang, das heißt die Bewegung der Steigelemente, unterbrochen, so dass durch die Bedienperson eine Korrektur herbeigeführt werden könnte.

Die erfindungsgemäße Steigvorrichtung kann zudem einen Neigungswinkelsensor und weitere Sensoren aufweisen, die in entsprechender logischer Verknüpfung zur genauen Detektion der Position der Trägereinheit zu der Treppe beitragen und einen sicheren Betrieb der Treppensteigvorrichtung gewährleisten.

Nachfolgend wird ein Ausführungsbeispiel einer erfindungsgemäß ausgebildeten und für einen Rollstuhl vorgesehenen Treppensteigvorrichtung anhand der Zeichnung näher erläutert.

Im Einzelnen zeigt
Fig. 1 eine schematische Teilseitenansicht eines Rollstuhles mit einem Laufradpaar der Treppensteigvorrichtung;
Fig. 2 eine schematische Seitenansicht des Laufradpaares mit den Antriebsvorrichtungen;
Fig. 3 eine gegenüber Fig. 2 vergrößerte Schnittdarstellung entlang der Linie III-III in Fig. 2 durch das Laufradpaar;
Fig. 4 eine schematische Seitenansicht des Rollstuhles;
Fig. 5 bis Fig. 8 den Rollstuhl in vier verschiedenen Stellungen seiner Treppensteigvorrichtungen beim Treppensteigen, wobei Fig. 7 die in normale Fahr- und Abstellposition der Steigräder beziehungsweise des Laufradpaares zeigt;
Fig. 9 eine der Fig. 3 entsprechende Teilschnittdarstellung durch eines der Laufräder eines Laufradpaares;
die Fig. 10a bis Fig. 10c eine schematische Darstellung des Steigvorgangs abwärts;
die Fig. 11a bis Fig. 11c eine schematische Darstellung des Steigvorgangs aufwärts;
die Fig. 12a bis Fig. 12c schematische Ansichten einer Treppensteigvorrichtung von der Seite, von hinten und von oben zur Darstellung der prinzipiellen Anordnungen von vier berührungslosen Sensoren;
Fig. 13 eine schematische Darstellung zur Funktionsweise eines Neigungswinkelsensors;
Fig. 14 eine schematische Darstellung der Funktionsweise eines berührungslosen Entfernungssensors nach dem Triangulationsprinzip;
die Fig. 15a bis Fig. 15c Darstellungen zur Erläuterung im Zusammenhang mit einem Leerhub,
Fig. 16 ein Flussdiagramm mit einer prinzipiellen Funktionsweise der Treppensteigvorrichtung und
Fig. 17 eine Darstellung zur Erläuterung der automatischen Fahrtrichtungserkennung.

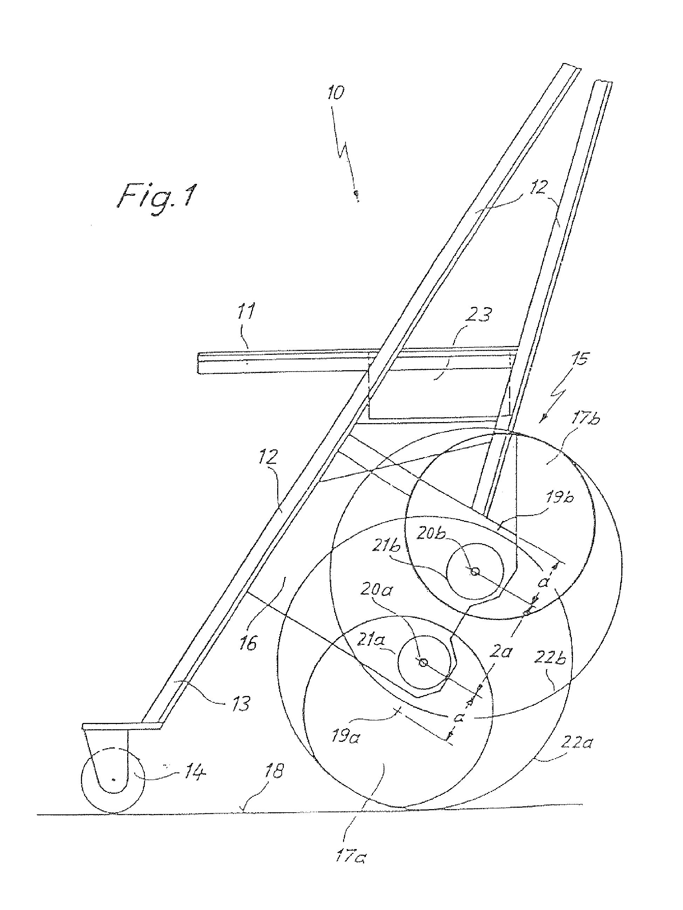

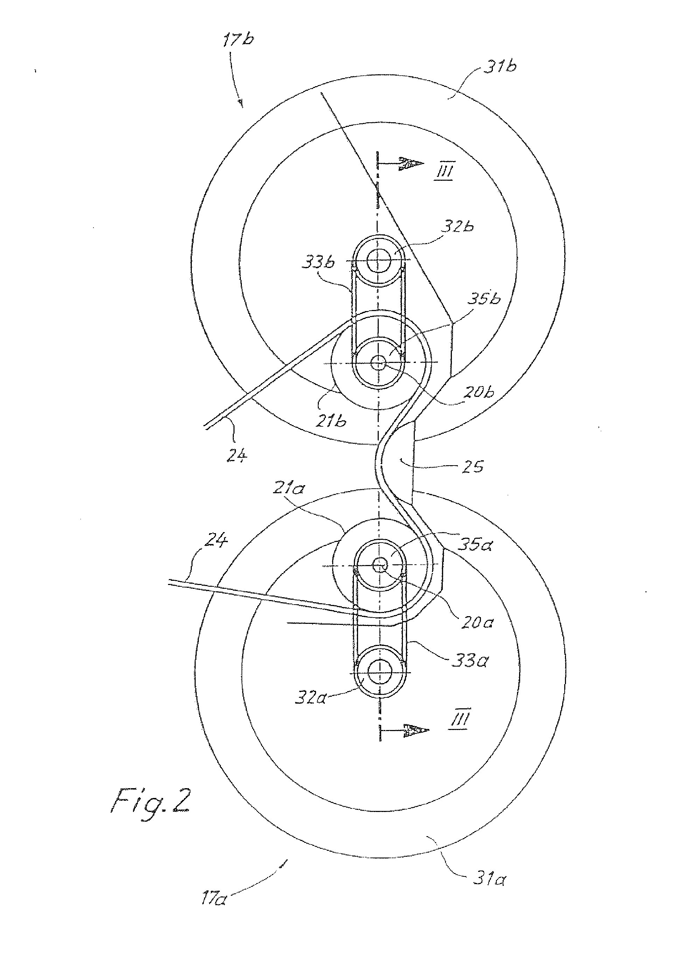

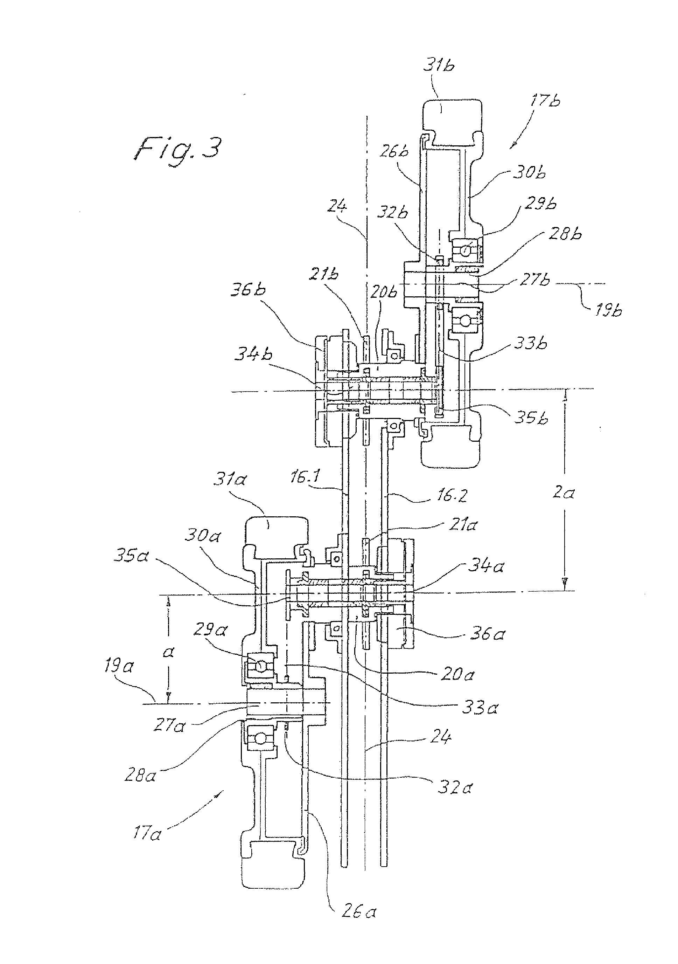

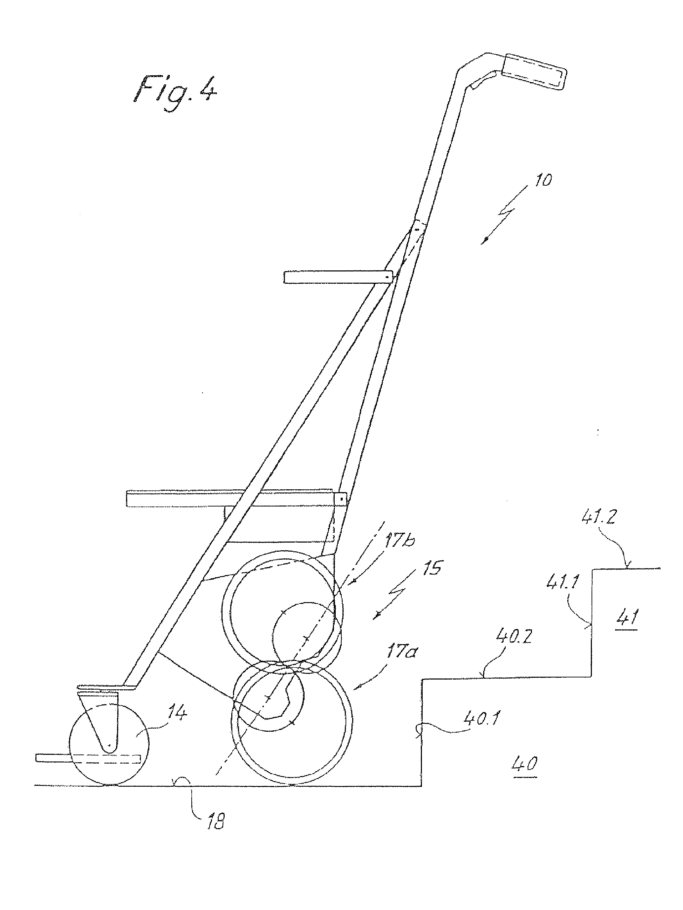

Fig. 1 zeigt in schematischer Seitenansicht einen Rollstuhl 10 für Gehunfähige, mit einem Sitzrahmen 11, der mit einem Stuhlrahmen 12 verbunden ist, der vorne in zwei Fußstegen 13 endet, an denen jeweils eine Lenkrolle 14 drehbar gelagert ist. In der Seitenansicht der Fig. 1 ist nur die linke Lenkrolle 14 ersichtlich. Am Stuhlgestell 12 ist ein Traggestell für eine Treppensteigvorrichtung 15 befestigt, das eine aus Fig. 1 ersichtliche linke Tragplatte 16 und auf der nicht sichtbaren rechten Seite des Rollstuhles 10 eine gleiche rechte Tragplatte 16 aufweist. An jeder Tragplatte 16 ist ein Paar von Laufrädern 17a und 17b angeordnet, von denen in der in Fig. 1 und Fig. 4 dargestellten Normalposition oder Ruhestellung der Treppensteigvorrichtung 15 eines auf der Fahrbahn 18 läuft. Der genaue Aufbau des Laufradpaares 17a/17b und die gegenseitige Anordnung der beiden Laufräder 17a und 17b sowie ihr Antrieb werden nachfolgend anhand der Fig. 2 und 3 näher erläutert. In Fig. 1 sind die Mittelpunkte 19a und 19b der beiden Laufräder 17a und 17b sowie exzentrisch dazu angeordnete und in der Tragplatte 16 gelagerte Antriebswellen 20a und 20b mit zugehörigen Antriebs-Kettenrädern 21a und 21b dargestellt. Außerdem sind die umhüllenden Kreise 22a und 22b eingetragen, welche den Umfang der Laufräder 17a und 17b bei ihrer Bewegung um die exzentrischen Antriebswellen 20a und 20b beschreiben. Der gegenseitige Abstand der beiden Antriebswellen 20a und 20b beträgt 2a, also den doppelten Wert des Abstands a des Mittelpunktes 19a oder 19b des Laufrades 17a oder 17b von der Achse seiner exzentrischen Antriebswelle 20a oder 20b.

Der elektrische Antriebsmotor, welcher die Treppensteigvorrichtung betätigt, ist in den Zeichnungen nicht dargestellt. Fig. 1 zeigt unter dem Sitzrahmen 11 einen Kasten 23 für die Unterbringung von Akkumulatoren, aus denen der gemeinsame, mit einer ebenfalls nicht dargestellten elektronischen Steuereinrichtung gekoppelte elektrische Antriebsmotor betrieben wird. Er bewegt eine aus Fig. 2 ersichtliche endlose Kette 24, die über die beiden Kettenräder 21a und 21b der beiden Antriebswellen 20a und 20b zur Erzielung einer jeweils gleichsinnigen und gleich schnellen Drehbewegung der beiden Antriebswellen 20a, 20b geführt ist. Zwischen den beiden Kettenrädern 21a und 21b wird die gemeinsame Antriebskette 24 über einen Gleitkörper 25 geführt, der auch durch ein Umlenkkettenrad ersetzt werden könnte. Es versteht sich, dass auf der rechten Seite des Rollstuhles 10 ein gleiches Laufradpaar in genau gleicher Art und Weise angeordnet und angetrieben ist.

Die Schnittdarstellung der Fig. 3 zeigt, dass die Tragplatte 16 aus zwei mit Abstand zueinander verlaufenden parallelen Plattenwänden 16.1 und 16.2 besteht, zwischen denen die gemeinsame Antriebskette 24, die nur durch eine strichpunktierte Linie angedeutet ist, geführt ist und die Kettenräder 21a und 21b angeordnet sind, die auf den als Hohlwellen ausgebildeten, in der Tragplatte 16.1/16.2 gelagerten Antriebswellen 20a und 20b befestigt sind.

Aus der Schnittdarstellung der Fig. 3 sind auch der Aufbau der Laufräder und eine auf die Laufräder wirkende Bremsvorrichtung ersichtlich. Jedes der beiden gleich ausgebildeten Laufräder 17a und 17b eines Laufradpaares weist eine Nabenscheibe 26a,26b auf, die mit der exzentrischen Antriebswelle 20a,20b fest verbunden ist und einen zentrischen Achsbolzen 27a,27b aufweist. Auf den Achsbolzen 27a,27b ist eine Lagerhülse 28a,28b aufgeschoben, auf welcher ein Wälzlager-Richtgesperre 29a,29b befestigt ist, auf welchem wiederum der in einem Gummireifen 31a,31b endende Laufkranz 30a,30b gelagert ist. Die Lagerhülse 28a,28b ist mit einem Kettenrad 32a,32b versehen, das über eine auch aus Fig. 2 ersichtliche endlose Kette 33a,33b mit einem koaxial zur zugeordneten hohlen Antriebswelle 20a,20b auf einem konzentrisch in der Antriebswelle gelagerten Wellenzapfen 34a,34b befestigten Kettenrad 35a,35b gekoppelt ist. Der Wellenzapfen 34a,34b ist in nicht näher dargestellter Weise mit der Bremsscheibe einer elektromagnetisch betätigbaren Bremsvorrichtung 36a,36b verbunden.

Die beiden Kettenräder 32a,32b und 35a,35b sind gleich groß, so dass sich ein Kettentrieb mit dem Übersetzungsverhältnis 1:1 ergibt. Wird die elektromagnetische Bremsvorrichtung 36a,36b über eine nicht dargestellte Steuereinrichtung aktiviert, ist der Wellenzapfen 34a,34b blockiert, was bedeutet, dass auch die Lagerhülse 28a,28b blockiert ist, so dass das Wälzlager-Richtgesperre 29a,29b eine Drehung des Laufkranzes 30a,30b des betreffenden Laufrades 17a,17b nur in einer Richtung gestattet. In der anderen Drehrichtung ist das betreffende Laufrad 17a,17b blockiert. Durch den Antrieb der Kette 24 und einer damit bewirkten Drehung der Antriebswellen 20a,20b wird aber die fest mit der Antriebswelle 20a,20b verbundene Nabenscheibe 26a,26b und damit auch der Laufkranz 30a,30b der Laufräder 17a und 17b verschwenkt, um die Treppensteigbewegung aufwärts oder abwärts - je nach eingestellter Drehrichtung des Antriebsmotors für die Kette 24 - auszuführen. Bei der Hubbewegung eines Laufrades bleibt sein Laufkranz auf Grund des gewählten Übersetzungsverhältnisses 1:1 des Kettentriebes gebremst stehen.

Aus den Fig. 2 und 3 ist ersichtlich, wie die Nabenscheibe 26b des einen Laufrades 17b des Laufradpaares 17a/17b gegenüber der Nabenscheibe 26a des anderen Laufrades 17a um einen Umfangswinkel von 180° versetzt mit der ihr zugeordneten Antriebswelle 20b verbunden ist.

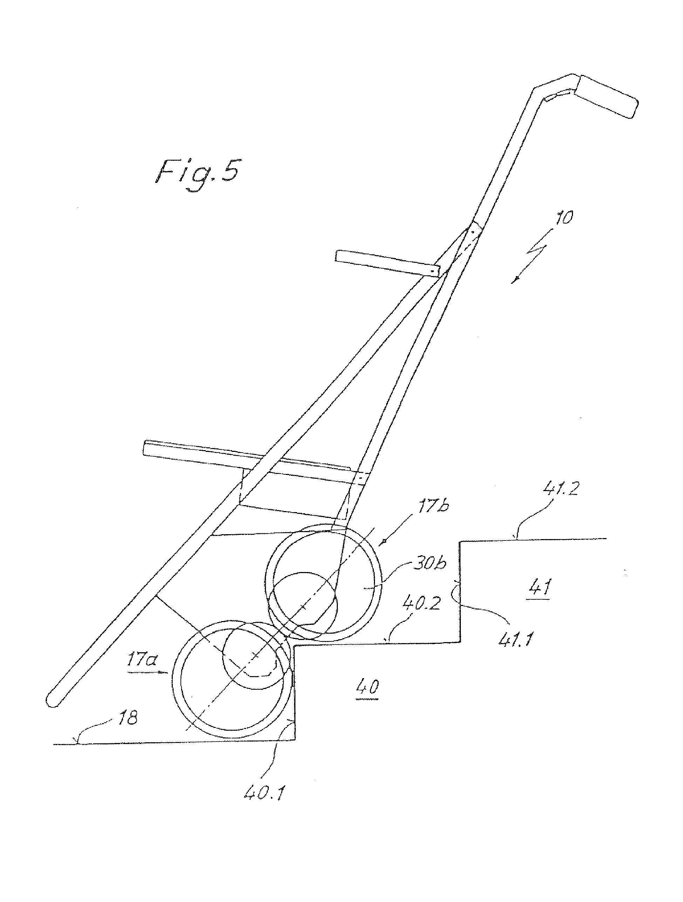

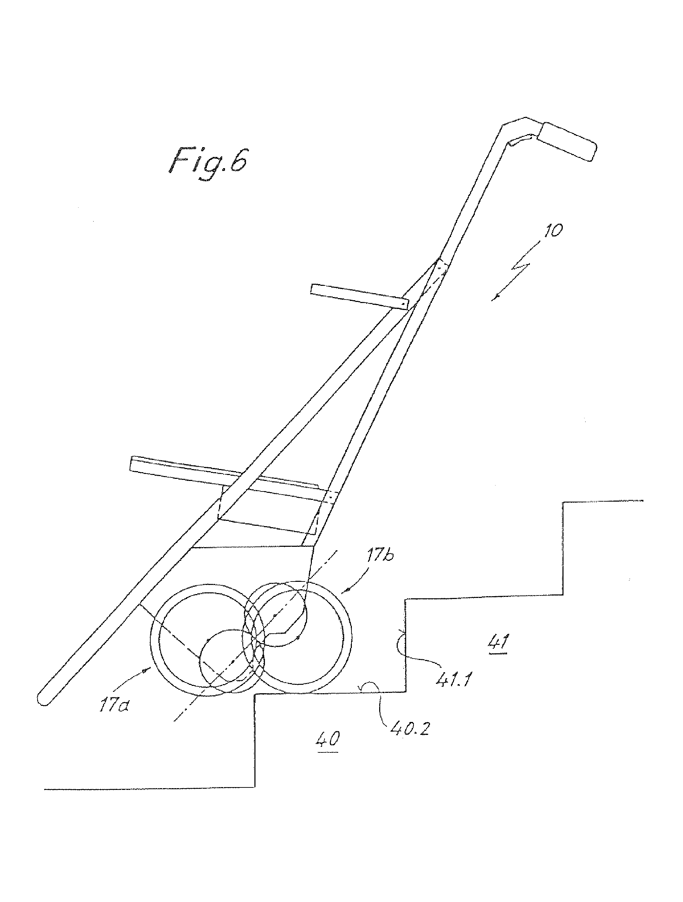

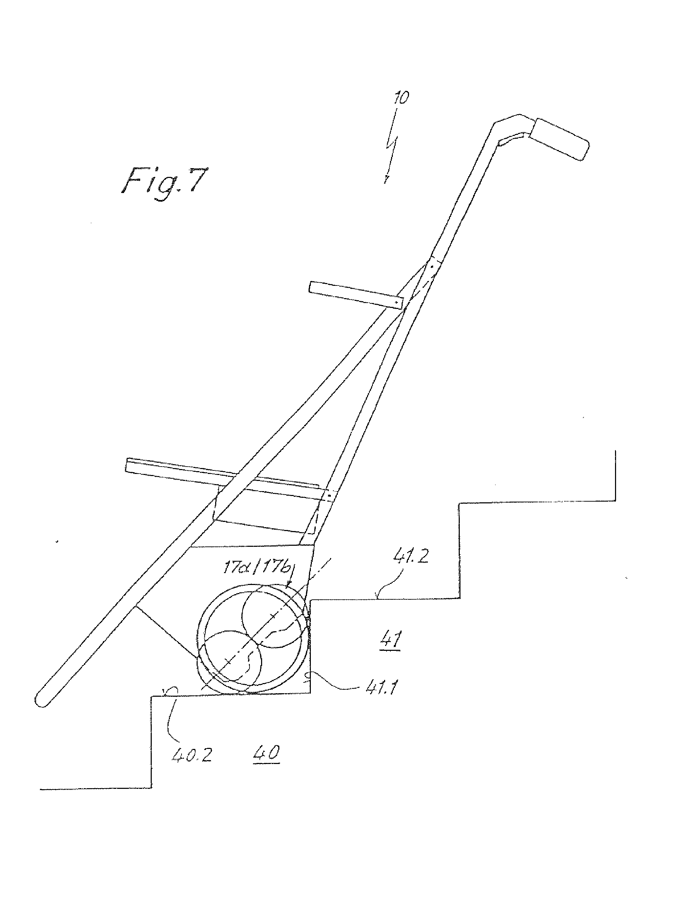

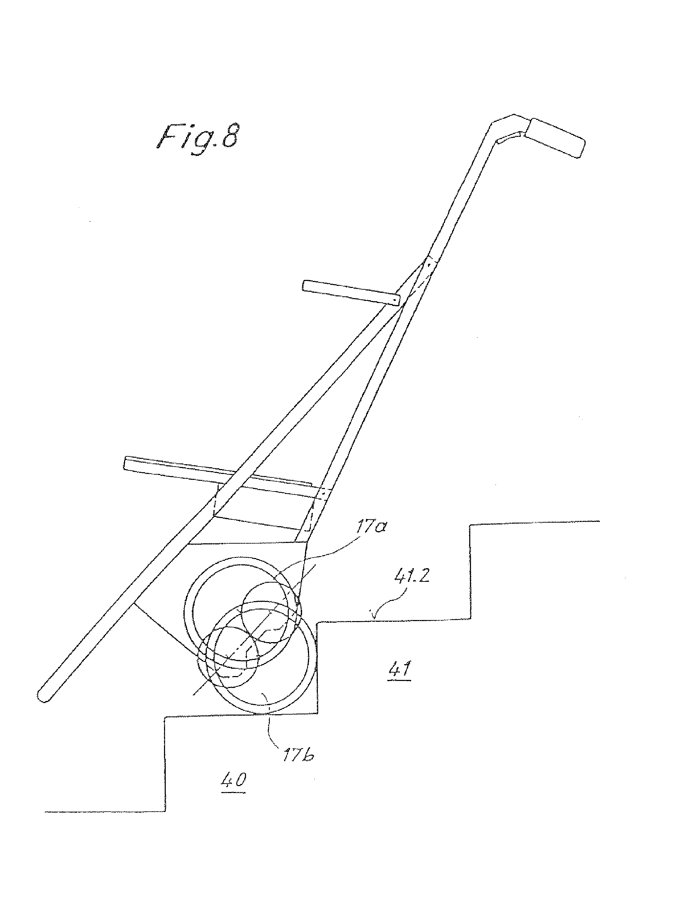

Die Fig. 4 bis 8 demonstrieren den Bewegungsablauf der Laufradpaare der Treppensteigvorrichtung beim Aufwärtssteigen. Die Figuren zeigen den Rollstuhl 10 jeweils in Seitenansicht und damit auch nur eines der beiden Laufradpaare der Treppensteigvorrichtung 15. Fig. 4 zeigt den Rollstuhl 10 in einer normalen Fahrstellung, in welcher die beiden Laufräder 17a und 17b beider Laufradpaare etwa übereinander angeordnet sind und das Laufrad 17a auf der Lauffläche 18 aufliegt. In dieser Stellung lässt sich der Rollstuhl 10 bei unbewegter Kette 24 und ohne eingelegte Bremsen frei verfahren. In dieser normalen Laufstellung wird der Rollstuhl 10 rückwärts gegen die Vorderkante 40.1 der ersten Treppenstufe 40 herangefahren, die Bremsen betätigt und dann der Antriebsmotor für die Kette 24 der Treppensteigvorrichtung 15 eingeschaltet. Dadurch wird das Laufrad 17b mit seinem in Vorwärtsrichtung blockierten Laufkranz 30b auf die Oberseite der ersten Stufe 40 bewegt, wie aus Fig. 5 ersichtlich ist. Der Rollstuhl 10 stützt sich jetzt auf das Laufrad 17b ab, während im weiteren Betrieb der Treppensteigvorrichtung das Laufrad 17a nach oben nachgeschwenkt wird, wie Fig. 6 zeigt. Der Rollstuhl lässt sich wegen des Wälzlager-Richtgesperres 29a auf den Laufrädern 17b bis zur Vorderkante 41.1 der nächsten Stufe 41 rollen. Im weiteren Verlauf der Bewegung der Treppensteigvorrichtung gelangen die beiden Laufräder 17a,17b der beiden Laufradpaare in eine aus Fig. 7 ersichtliche koaxiale Stellung, aus welcher heraus das Laufrad 17a gemäß Fig. 8 hochgeschwenkt wird, bis es analog der Stellung nach Fig. 5 auf die Trittfläche 41.2 der zweiten Treppenstufe 41 gelangt. Dieser Vorgang wiederholt sich, wobei abwechselnd das eine Laufrad 17a und das andere Laufrad 17b auf die jeweils nächste Treppenstufe hochgehoben werden.

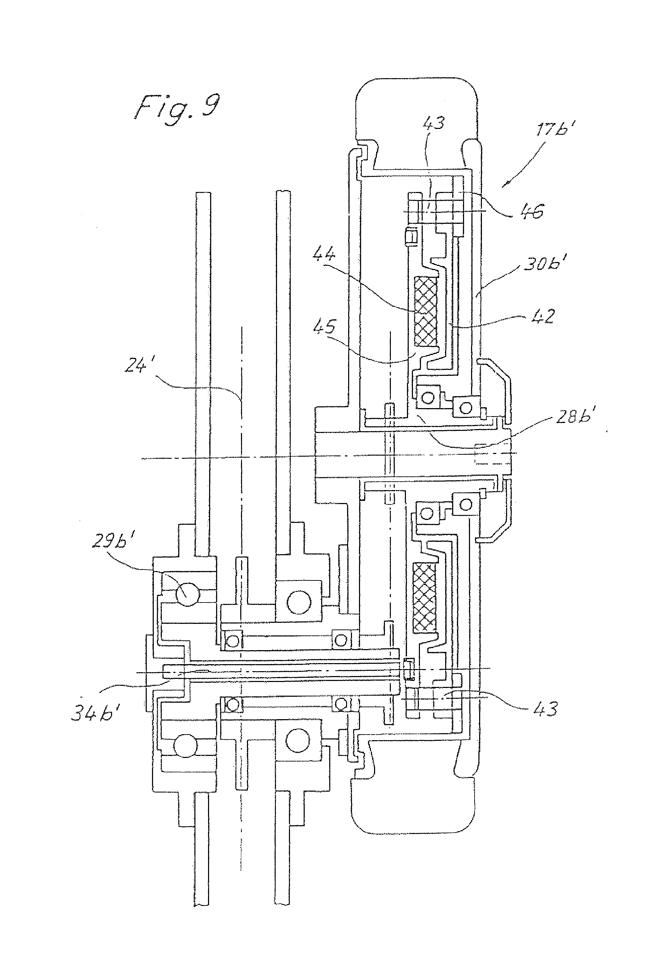

Fig. 9 zeigt einen einzelnen Längsschnitt durch ein Laufrad 17b' einer Treppensteigvorrichtung, bei welcher die elektromagnetische Bremsvorrichtung an der Nabenscheibe 30b' angeordnet ist. Dadurch ergibt sich eine größere Bremsfläche. Eine mit dem Laufkranz 30b' verbundene Ankerscheibe 42 ist durch Federn in die Bremsstellung vorgespannt, in welcher an ihr befestigte Sperrbolzen 43 in einen am Laufkranz 30b' befestigten Lochring 46 eingreifen, so dass bei Stromausfall die Bremsvorrichtung automatisch wirksam wird. Zum Lösen der Bremse wird die auf einer mit der Lagerhülse 28b' fest verbundenen Gegenscheibe 45 angeordnete Magnetwirkung 44 erregt und dadurch die Bremse gelöst. Ein Wälzlager-Richtgesperre 29b' ist hier auf dem Wellenzapfen 34b' angeordnet.

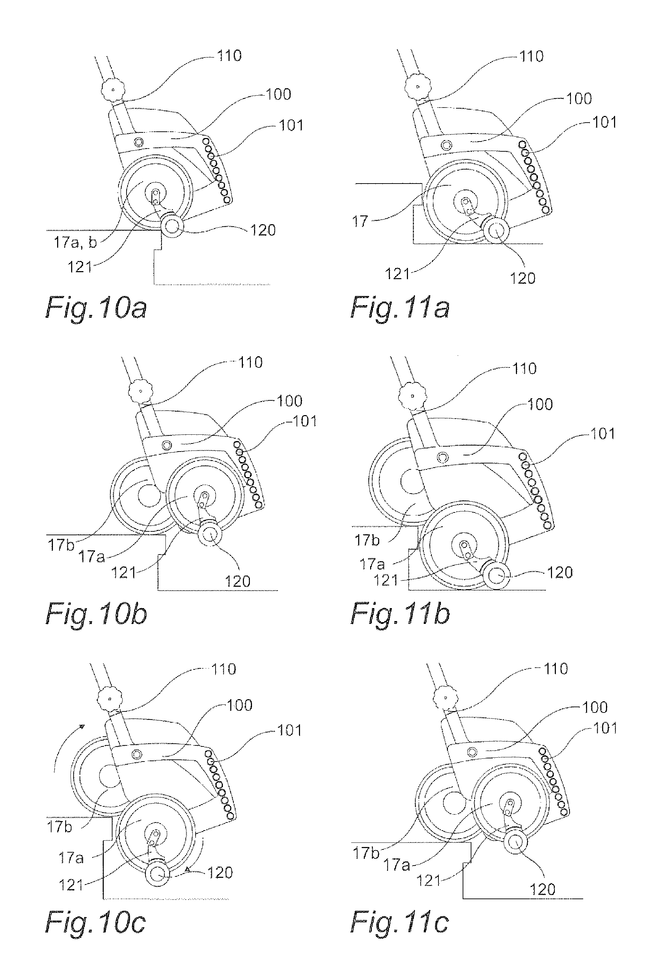

In der Ausführungsform gemäß den Fig. 10 bis Fig. 15 ist eine Kniehebelbremse vorgesehen, bei der ein unterhalb der Mittelachse des Laufrades schwenkbar gelagerter Hebel mittels eines Federelements gegen den Fahruntergrund gedrückt wird. An dem äußeren Ende des Hebels ist eine Tastrolle 120 drehbar so angeordnet, dass sie beim Vorschieben der Treppensteigvorrichtung zum Zwecke des Absenkens auf den nächsten unteren Treppenabsatz in Bewegungsrichtung gesehen vor der Mittelachse des Laufrades angeordnet ist. Der Hebel verfügt über eine seitlich angebrachte Bremsbacke, die mit dem Laufrad in Eingriff gelangen kann, wobei sie vorzugsweise in einen radialen Hinterschnitt des Laufrades eingreift. Wenn die Treppensteigvorrichtung zum Absenken auf den nächsten unteren Treppenabsatz in Richtung der Treppenkante bewegt, so senkt sich der Hebel ab, sobald die Tastrolle 120 den Treppenabsatz überschritten hat, und infolge der kniehebelartigen Funktion wird das Rad gebremst bzw. blockiert. Die Anordnung ist hierbei so gewählt, dass die Bremskräfte umso größer werden, je größer die Kraft in der Vorwärtsbewegungsrichtung ist. Hierdurch wird ein Durchrutschen der Bremse zuverlässig verhindert.

Bei den vorstehend beschriebenen und in den Figuren dargestellten Ausführungsbeispielen ist die Trägereinheit durch den Sitzrahmen 11 und den Stuhlrahmen 12 verwirklicht. Es versteht sich, dass das erfindungsgemäße Prinzip auf beliebige andere Treppensteigvorrichtungen anwendbar ist. Beispielsweise können Treppensteigvorrichtungen vorgesehen sein, die mit einem bestehenden handelsüblichen Rollstuhl verbunden werden können.

Das erfindungsgemäße Prinzip ist zudem auf beliebige andere Treppensteigvorrichtungen anwendbar, die mit oder ohne externe Bedienpersonen zum Transportieren von Lasten oder Personen auf Treppen geeignet sind.

In den Fig. 10 bis Fig. 15 ist eine Ausführungsform einer Treppensteigvorrichtung dargestellt, bei der die Steigeinheit im Wesentlichen dem in Verbindung mit den Fig. 1 bis Fig. 9 beschriebenem Ausführungsbeispiel entspricht und die Trägereinheit durch ein Gehäuse 100 dargestellt ist, welches funktional der aus Sitzrahmen 11 und Stuhlrahmen 12 gebildeten Trägereinheit des Ausführungsbeispiels gemäß den Fig. 1 bis Fig. 9 entspricht. Das Gehäuse 100 weist an seiner Vorderseite eine Vielzahl von Bohrungen 101 auf, die dazu dienen, in Verbindung mit entsprechenden Verbindungselementen (nicht dargestellt) einen Rollstuhl (nicht dargestellt) an dem Gehäuse 100 zu befestigen. Halterohre 110, die in den Figuren nur schematisch als Rohrsegmente dargestellt sind, verbinden das Gehäuse 100 mit einer Griff- und Bedieneinheit, die ebenfalls in den Figuren nicht dargestellt ist. Die Darstellung in den Figuren ist zudem teilweise nur skizzenhaft und schematisch sowie im Maßstab nicht einheitlich.

Die Fig. 10a bis Fig. 10c zeigen schematisch den Steigvorgang abwärts. Die Treppensteigvorrichtung wird bis an die Stufenkante gefahren. Sobald Tastrollen 120, die an verschwenkbaren Armen 121 gelagert sind, über die Stufenkante hinaus treten, wird durch das Verschwenken der Arme 121 eine Bremsfunktion der Laufräder 17 aktiviert. In der Darstellung gemäß Fig. 10a stehen die äußeren Laufräder 17a und die inneren Laufräder 17b koaxial zueinander (Neutralstellung). Anhand der Fig. 10b und Fig. 10c ist ersichtlich, wie durch Verschwenken der äußeren Laufräder 17a und der inneren Laufräder 17b das Gehäuse 100 auf die nächstuntere Treppenstufe abgesenkt wird.

Die Fig. 11a bis Fig. 11c zeigen in entsprechender schematischer und vereinfachter Darstellung den Steigvorgang aufwärts. Hierzu wird die Treppensteigvorrichtung bis an die Kante der nächstoberen Stufe herangefahren, durch Verschwenken der Laufräder gelangen die inneren Laufräder 17b mit der nächsthöheren Stufenfläche in Berührung, wobei gleichzeitig das Gehäuse 100 bereits angehoben wird (siehe Fig. 11b) und schließlich über den in Fig. 11c gezeigten weiteren Zwischenstand eine sogenannte Neutralstellung erreichen, wie sie in Fig. 10a dargestellt ist.

Es versteht sich, dass hierzu die Bedienperson über die nicht dargestellte Griffeinheit und die Halterohre 110 die Treppensteigvorrichtung mit dem daran befestigten Rollstuhl (nicht gezeigt) in eine geeignete Kippposition neigt.

Mit den Begriffen Neigungen und Neigungswinkel werden hierbei die Winkelverhältnisse zur senkrechten auf den Untergrund, beispielsweise die Treppenstufe, welche als waagerecht angenommen wird, bezeichnet, wogegen die Begriffe schräg und Schrägstellung sich auf die Positionierung zum Verlauf einer Treppenkante beziehen, das heißt eine Winkelstellung innerhalb der Waagerechten.

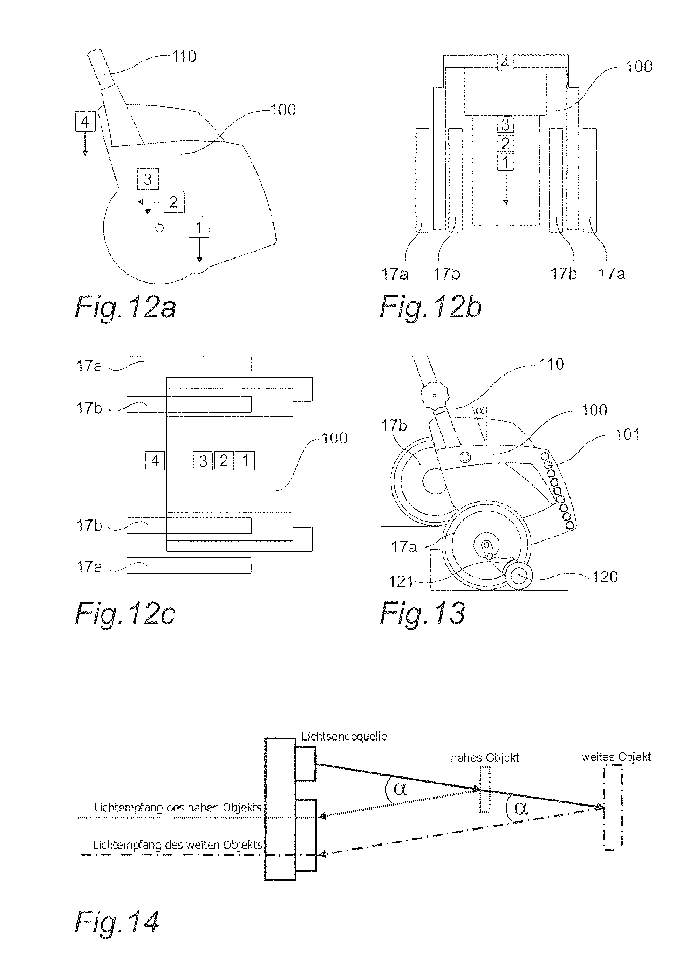

Fig. 12a ist eine schematische Seitenansicht des Gehäuses 100, bei der in quadratischen Kästchen die Positionen angedeutet sind, in denen vier berührungslose Sensoren 1, 2, 3 und 4 angebracht sind. Die Pfeile an den jeweiligen Kästchen zeigen zudem an, in welcher Richtung die Abtastfunktion der Sensoren wirksam ist. Entsprechend zeigt Fig. 12b eine Rückansicht des Gehäuses 100 und Fig. 12c eine Ansicht des Gehäuses 100 von oben, ebenfalls jeweils in schematischer Darstellung.

Aus diesen Darstellungen ist ersichtlich, dass der Sensor 1 relativ weit unten und vorne an dem Gehäuse 100 befestigt ist, wobei seine Abtastrichtung nach unten verläuft, der Sensor 2 in rückwärtiger Richtung abtastet und die Sensoren 3 und 4 ebenfalls nach unten abtasten, wobei der Sensor 3 weiter vorne und weiter unten angeordnet ist als der an der Rückseite des Gehäuses 100 oben angeordnete Sensor 4. Wie insbesondere aus Fig. 12b ersichtlich, sind die berührungslosen Sensoren 1, 2, 3 und 4 mittig am Gehäuse 100 angebracht.

Fig. 13 zeigt, dass relativ zur Senkrechten ein Neigungswinkel α durch einen Neigungswinkelsensor (nicht gezeigt) erfasst wird.

Das grundsätzliche Funktionsprinzip eines berührungslosen optischen Sensors ist in Fig. 14 dargestellt. Fig. 14 zeigt, dass der Abstand eines Objekts von dem Sensor durch die Stelle ermittelt werden kann, an der reflektiertes Licht, welches von einer Lichtsendequelle aus gesandt wird, auf der Lichtempfangsfläche des Sensors empfangen wird.

Im Folgenden werden die Funktionen im Zusammenhang mit dem Abtasten der Sensoren sowie den weiteren Einrichtungen der Treppensteigvorrichtung, insbesondere der Tastrollen 120 und dem Neigungswinkelsensor (nicht gezeigt), der diesbezüglichen Steuereinrichtung (nicht gezeigt) und den jeweiligen Fahrsituationen erläutert.

Neben den vorstehend genannten Sensoren sind weiterhin ein Lagebestimmungssensor zum Erfassen einer bestimmten Lage des Steigelements, insbesondere der Laufräder 17a und 17b, der als HAL-Sensor ausgeführt sein kann und insbesondere bei der Ermittlung der Neutralstellung verwendet wird, sowie ein Zähl-Sensor zum Zählen der Umdrehungen des Antriebsmotors, der ebenfalls als HAL-Sensor ausgeführt sein kann und insbesondere bei der Ermittlung der momentanen Steigstellung und der Fahrtrichtung Verwendung findet, vorgesehen. Der Neigungswinkelsensor zur Bestimmung des Haltewinkels α (siehe Fig. 13) kann als Beschleunigungs-Sensor ausgeführt sein, der die Erdbeschleunigungsabweichung misst.

Vor Beginn eines Steigvorgangs abwärts werden die Laufräder 17a, 17b in die sogenannte Neutralstellung gebracht, dass heißt die Stellung, in der alle vier Räder sich in Parallelstellung befinden. Anschließend wird die Treppensteigvorrichtung zusammen mit dem angedockten Rollstuhl (nicht gezeigt) von der Bedienperson nach hinten in eine Gleichgewichtslage gekippt und vorwärts an die Treppe heran gefahren, bis die Tastrollen 120, die als mechanische Tastrollen ausgeführt sein können, die Stufenkante erreichen, über diese hinaustreten und hierdurch eine Bremswirkung auf die Laufräder 17a, 17b hervorrufen. Anschließend wird mittels eines Fahrtrichtungsschalters (nicht gezeigt) die Fahrtrichtung abwärts gewählt und mittels eines Fahrschalters (nicht gezeigt) der Steigvorgang eingeleitet. Hierdurch beginnt das äußere Paar Laufräder 17a, sich von der Stufenkante wegzubewegen, wobei die inneren Laufräder 17b gebremst an der Stufenkante stehen bleiben. Gleichzeitig wird das Gehäuse 100 mit dem daran angebrachten Rollstuhl (nicht gezeigt) in Richtung der nächstunteren Stufe abgesenkt.

Der Steigvorgang kann durch Loslassen des Fahrschalters jederzeit unterbrochen werden, so dass alle Räder unmittelbar stehen bleiben.

Die die Treppensteigvorrichtung bedienende Person muss das Gesamtsystem aus Treppensteigvorrichtung, Rollstuhl und in dem Rollstuhl sitzender Person permanent im Gleichgewicht halten. In Notsituationen kann das Gesamtsystem nach hinten auf die Stufen an der Treppe abgelegt werden, was keine gefährliche Situation zur Folge hat, da, wie vorstehend erläutert, die Laufräder in dieser Stellung gebremst sind.

Eine gefährliche Situation kann allerdings unter Umständen dadurch hervorgerufen werden, dass der Steigvorgang abwärts in einer Stellung ausgelöst wird, in der sich das Gehäuse 100 in einer Stellung schräg zur Stufenkante befindet, beispielsweise dann, wenn eines der Laufräder soweit vorgeschoben ist, dass die diesbezügliche Tastrolle 120 bereits eine Bremswirkung entfaltet, das andere Laufradpaar jedoch noch nicht gleich weit vorgeschoben wurde. Eine derartige Schrägstellung kann durch den berührungslosen Sensor 1 erfasst werden. Dieser liefert ein relatives Abstandsmessergebnis zur Auftrittsfläche, welches in Form bestimmter Dateninformationen an das Steuergerät weitergeleitet wird. In Verbindung mit den Signalen des Neigungswinkelsensors sowie der Bremsfunktion der Tastrolle 120 kann somit sichergestellt werden, dass eine zum Steigvorgang abwärts geeignete Stellung erkannt wird. In diesem Fall kann der Steigvorgang eingeleitet werden.

Wird eine derartige Stellung nicht erkannt, weil die Schrägstellung gegenüber der Stufenkante zu groß ist, verhindert die Steuereinheit nach Empfang entsprechender Signale der diesbezüglichen Sensoren, dass der Steigvorgang eingeleitet wird. Hierbei können, wie auch in anderen Gefahrensituationen, entsprechende optische, akustische und sonstige Warnsignale ausgegeben werden.

Bei dem Steigvorgang aufwärts wird die Treppensteigvorrichtung ebenfalls zunächst in einen Zustand versetzt, in der sich die Laufräder 17a, 17b in Neutralstellung befinden. In diesem Zustand wird die Treppensteigvorrichtung rückwärts bis ganz an die nächste Stufe herangezogen. Nach Vorwahl der Fahrtrichtung aufwärts und Betätigung des Fahrschalters beginnt das innere Paar Laufräder 17b, sich in Richtung der nächsthöheren Stufe zu bewegen. Gleichzeitig wird das Gehäuse 100 mit dem daran befestigten Rollstuhl (nicht gezeigt) angehoben. Im Moment des Aufsetzens der inneren Laufräder 17b auf die nächsthöhere Stufe verlagert sich die Last von den äußeren Laufrädern 17a auf der unteren Stufe auf die inneren Laufräder 17b der oberen Stufe. Diesem Lastwechsel muss die Bedienperson entsprechend Rechnung tragen. Ebenso wie beim Steigvorgang abwärts kann der Steigvorgang aufwärts jederzeit durch Loslassen des Fahrschalters (nicht gezeigt) unterbrochen werden. Sobald alle vier Laufräder 17a, 17b wieder parallel zueinander auf der Treppenstufe stehen, ist der Steigzyklus beendet.

Eine Gefahr beim Steigvorgang aufwärts besteht insbesondere darin, dass der Steigvorgang ausgelöst wird, wenn sich die Treppensteigvorrichtung noch nicht ausreichend nahe an der Stufenkante befindet. Dies kann dazu führen, dass die inneren Laufräder 17b nur mit einer geringen Überdeckung auf der Trittfläche der oberen Stufe aufsetzen, was zu einem Abrutschen führen kann. Eine weitere Gefahr besteht darin, dass der Steigvorgang in einer unzulässig großen Schrägstellung zur oberen Stufenkante ausgeführt wird, was zur Folge haben kann, dass lediglich eines der beiden inneren Laufräder 17b auf der oberen Stufenkante aufsetzen würde.

Diesbezüglich wird insbesondere durch den berührungslosen Sensor 4 sichergestellt, dass ein ausreichend geringer Abstand zwischen dem Gehäuse 100 und der nächsthöheren Treppenstufe gewährleistet ist. Da sich beim Zurückziehen der Treppensteigvorrichtung ein natürlicher Anschlag bildet, kann mittels des mittig angebrachten berührungslosen Sensors 4 auch eine entsprechende Schrägstellung detektiert werden.

Zudem kann mittels des berührungslosen Sensors 2 während des Steigvorgangs in Abhängigkeit des Haltewinkels α die Stufenhöhe permanent erfasst und mit dem Messergebnis des berührungslosen Sensors 4 abgeglichen werden. Hierdurch kann insbesondere der Zeitpunkt ermittelt werden, zu dem der berührungslose Sensor 2 über die Stufenkante hinausgehoben wird, da in diesem Fall ein Sprung in dem Messergebnis auftritt. Hierdurch kann die exakte Stufenhöhe ermittelt werden, was für weitere Funktionen der Treppensteigvorrichtung genutzt werden kann und eine exakte Ermittlung der Treppenstufengeometrie ermöglicht.

Auch der weiter vorne und weiter unten angeordnete berührungslose Sensor 3 und die von diesem ermittelten Messergebnisse gehen in die Sicherheitsfunktion beim Steigvorgang aufwärts ein. Während der berührungslose Sensor 4 insbesondere zu Beginn des Steigvorgangs von Bedeutung ist, da er in der tiefsten Stellung des Gehäuses 100 das Vorhandensein der oberen Stufenkante ermittelt, sind die Signale des weiter vorne und weiter unten angeordneten berührungslosen Sensors 3 insbesondere beim Aufsetzen der inneren Laufräder 17b von Bedeutung, da er sich in diesem Stadium des Steigvorgangs näher an der diesbezüglichen Stufenoberfläche befindet.

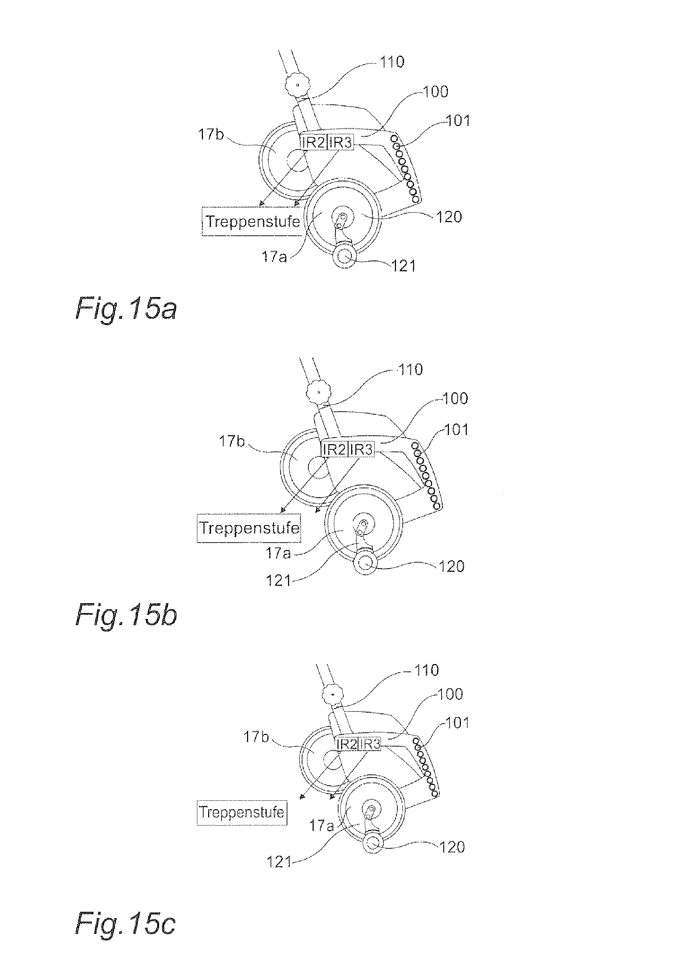

Das Zusammenwirken der berührungslosen Sensoren 3 und 4 ist auch für die in den Fig. 15a bis Fig. 15c dargestellte Konstellation im Zusammenhang mit dem sogenannten Leerhub von Bedeutung.

Fig. 15a zeigt einen Zustand beim Steigen treppauf kurz vor dem Aufsetzen der inneren Laufräder 17b auf die nächsthöhere Treppenstufe. Bei der in Fig. 15a gezeigten Stellung detektieren sowohl der berührungslose Sensor 4 als auch der weiter vorne angeordnete berührungslose Sensor 3 die obere Treppenstufe. Hierdurch wird sichergestellt, dass die inneren Laufräder 17b in geeigneter Weise auf die obere Treppenstufe aufsetzen können.

In der Darstellung gemäß Fig. 15b detektiert zwar der weiter hinten angeordnete berührungslose Sensor 4 die Oberfläche der nächstoberen Treppenstufe, nicht jedoch der weiter vorne angeordnete berührungslose Sensor 3. Dies wird als Zustand erkannt, in der die Überdeckung zwischen den inneren Laufrädern 17b und der Stufenoberfläche nicht ausreichend ist. In diesem Fall würde der Steigvorgang unterbrochen werden. Erst, wenn die Treppensteigvorrichtung näher an die Stufenkante herangezogen wird, so dass wieder eine Stellung gemäß Fig. 15a erreicht wird, könnte der Steigvorgang fortgesetzt werden.

In der in Fig. 15c dargestellten Konstellation würde der berührungslose Sensor 3 ebenfalls keine Stufenoberfläche detektieren und daher grundsätzlich eine Fortführung der Steigbewegung gemäß entsprechender Steuereingriffe der Steuereinheit verhindern. Ein derartiger Leerhub kann allerdings gewünscht sein, insbesondere im Zusammenhang mit dem Andocken der Treppensteigvorrichtung an einen Rollstuhl. Hierzu kann die Treppensteigvorrichtung in eine gewünschte Höhe angehoben werden, da, wie eingehend erläutert, bereits beim Verschwenken der inneren Laufräder 17b gleichzeitig ein Anheben des Gehäuses 100 erfolgt. Zum Bewirken des Steigvorgangs muss jedoch zunächst wieder die Neutralstellung erreicht werden, das heißt die inneren Laufräder 17b müssen bis zur Parallelstellung zu den äußeren Laufrädern 17a auf ihrer Kreisbahn weitergeführt werden.

Um dies zu ermöglichen, wird neben den Signalen des berührungslosen Sensors 3 auch das Signal des berührungslosen Sensors 4 abgefragt. Erkennen beide berührungslose Sensoren keine Stufenoberfläche, so erkennt die Steuereinheit daraus, dass keine Stufenoberfläche in der Nähe ist, so dass eine Gefahr durch Aufsetzen mit nicht ausreichender Überdeckung oder nur einseitiges Aufsetzen nicht vorliegt und der Leerhub damit vervollständigt werden kann.

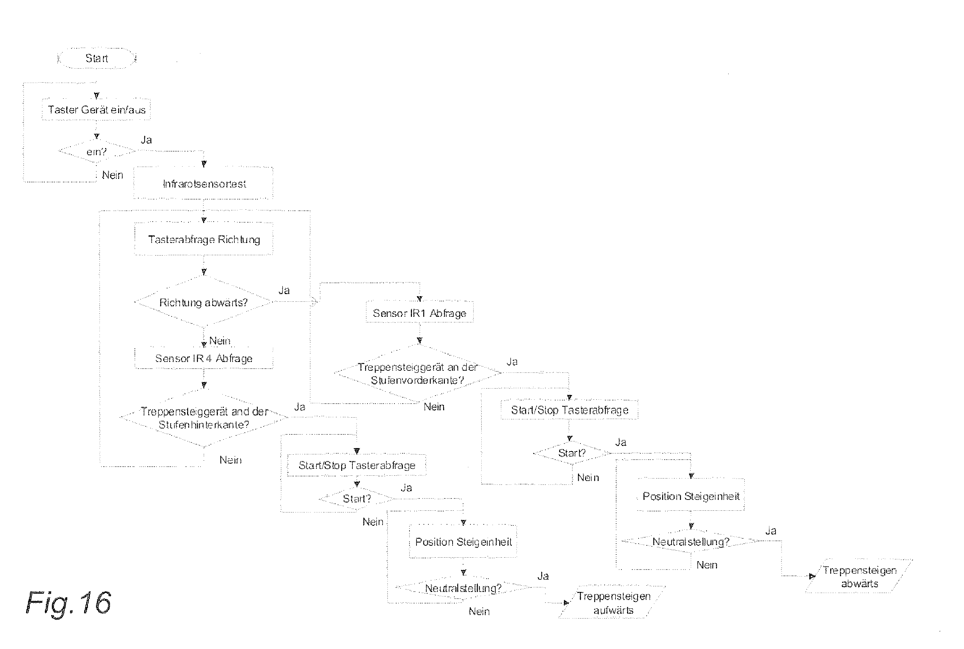

Fig. 16 zeigt ein schematisches Ablaufdiagramm der vorstehend erläuterten Funktionen.

Im Folgenden werden die Funktionen der Treppensteigvorrichtung erläutert, die eine automatische Fahrtrichtungserkennung und eine automatische Start-/Stopp-Funktion betreffen.

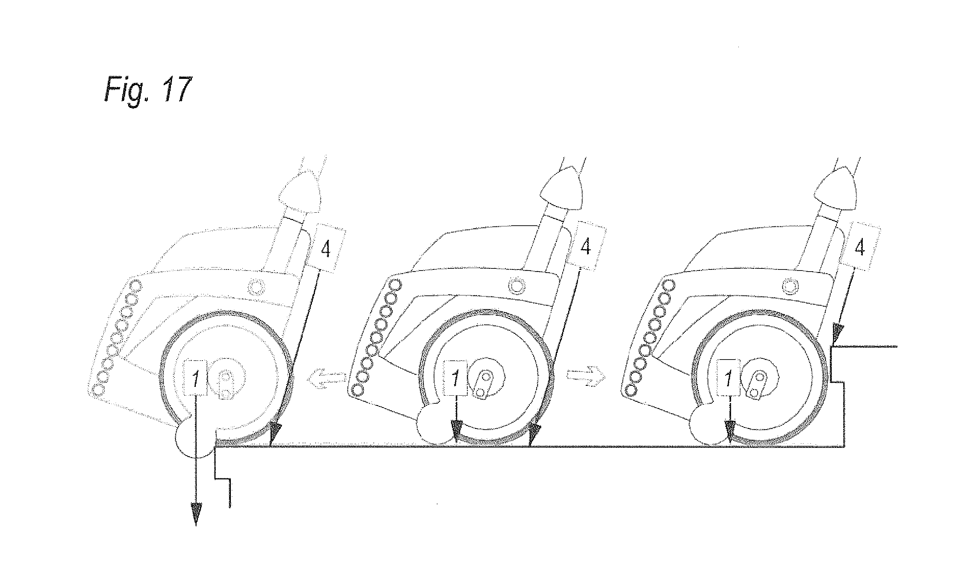

Mittels der automatischen Fahrtrichtungserkennung kann, beispielsweise in der Neutralstellung der Laufräder 17, mit Hilfe der Sensoren festgestellt werden, in welche Richtung ein Steigvorgang stattfinden soll. Diesbezüglich sind insbesondere die Sensoren 1 und 4 involviert. Wie aus der Zeichnung, insbesondere aus Fig. 17, ersichtlich, erfassen die Sensoren 1 und 4 den Abstand zu einer Fläche unter der Treppensteigvorrichtung. Wenn die Laufräder 17 sich in der Neutralstellung befinden, wie in Fig. 17 dargestellt, und sich die Treppensteigvorrichtung mittig auf einer Treppenstufe befindet, wie in der mittleren Darstellung in Fig. 17 dargestellt, also in ausreichendem Abstand sowohl von der Vorderkante der Stufe als auch von deren Hinterkante, so detektieren die Sensoren 1 und 4 den Abstand zu der Auftrittsfläche der Stufe, auf der die Treppensteigvorrichtung steht. Dieser Wert hängt von den Abmessungen der Treppensteigvorrichtung und der Positionierung der Sensoren hieran ab. Ein typischer Wert für den Sensor 1 ist beispielsweise 8 cm und ein typischer Wert für den Sensor 4 ist 28 cm.

Wird die Treppensteigvorrichtung nach vorne verschoben, das heißt in Richtung treppab an die Vorderkante der Stufe, wie in der linken Darstellung in Fig. 17 dargestellt, so misst der vordere Sensor 1 den Abstand zu der Auftrittsfläche der nächsten, darunterliegenden Stufe, der naturgemäß erheblich größer ist, nämlich um die diesbezügliche Stufenhöhe, während der von dem hinteren Sensor 4 gemessene Abstandswert unverändert bleibt. Die Steuereinheit erkennt daraus, dass die gewünschte Fahrtrichtung beziehungsweise Steigrichtung treppab sein muss. Bei einer Betätigung einer den Steigvorgang manuell einleitenden Taste der Bedienungseinrichtung (nicht gezeigt) muss bei einem derartigen, eine automatische Fahrtrichtungserkennung beinhaltenden Betriebsmodus keine Richtungstaste betätigt werden, da die Fahrtrichtung automatisch aus der Stellung der Treppensteigvorrichtung relativ zur Treppenstufe erkannt wurde.

Wird demgegenüber die Treppensteigvorrichtung nach hinten verschoben, das heißt in Richtung treppauf an die Hinterkante der Stufe, wie in der rechten Darstellung in Fig. 17 dargestellt, so misst der hintere Sensor 4 den Abstand zu der Auftrittsfläche der nächsten, darüberliegenden Stufe, der naturgemäß erheblich kleiner ist, nämlich wiederum um die diesbezügliche Stufenhöhe, während der von dem vorderen Sensor 1 gemessene Abstandswert unverändert bleibt. Die Steuereinheit erkennt daraus, dass die gewünschte Fahrtrichtung beziehungsweise Steigrichtung treppauf sein muss und steuert die Steigeinheit bei einer Betätigung der den Steigvorgang manuell einleitenden Taste der Bedienungseinrichtung entsprechend an.

Die weiteren, oben beschriebenen Sicherheitsmerkmale können in Kombination mit dieser automatischen Fahrtrichtungserkennung zum Einsatz kommen.

Insbesondere bei einer derartigen Verknüpfung der Sicherheitsfunktionen mit der automatischen Fahrtrichtungserkennung besteht die Möglichkeit, auch eine automatische Start-/Stopp-Funktion zu realisieren. Diese wird im Folgenden erläutert.

Wenn die Treppensteigvorrichtung die in Fig. 10a dargestellte Position erreicht hat, die der linken Darstellung in Fig. 17 entspricht, so erkennt die Steuereinheit aus den Signalen der jeweiligen Detektoren sowohl die Fahrt- beziehungsweise Steigrichtung, nämlich treppab, als auch die richtige und exakte Positionierung, die zur sicheren Durchführung des Steigvorgangs erforderlich ist, und löst den Steigvorgang treppab automatisch aus. Würde beispielsweise lediglich die Fahrtrichtung erkannt, weil der Sensor 1 einen entsprechend großen Abstand detektiert, nicht jedoch, gemäß den zuvor beschriebenen Sicherheitsfunktionen, eine für den sicheren Steigvorgang geeignete Stellung detektiert, würde der automatische Start nicht ausgelöst.

Bezüglich der nachfolgenden Erläuterungen des Zusammenwirkens der Sicherheitsfunktionen und Sicherheitsmerkmale der Treppensteigvorrichtung bei dem automatischen Steigvorgang ist zunächst nochmals darauf hinzuweisen, dass jedes der Laufräder 17a, 17b, das heißt sowohl die beiden inneren Laufräder 17b als auch die beiden äußeren Laufräder 17a, mit jeweiligen Tastrollen 120 versehen sind. Zum Zwecke der einfachen Darstellung sind diese in den Figuren bei den inneren Laufrädern nicht gezeigt.

Bei der in den Fig. 10a bis Fig. 10c dargestellten Position der Treppensteigvorrichtung, in der der Steigvorgang treppab stattfindet, befinden sich die nicht dargestellten Tastrollen der beiden inneren Laufräder 17b in der gleichen Position, wie diese für die Tastrolle 120 des rechten äußeren Laufrades 17a in Fig. 10a dargestellt ist. Dies bedeutet, dass die Treppensteigvorrichtung nicht nach vorne verschoben werden kann.

Die Sperrung der Laufräder 17 durch die Tastrollen 120 erfolgt allerdings nur in Vorwärtsrichtung, das heißt in Richtung der Tastrollen 120. Dies bedeutet, dass während des Steigvorgangs, dass heißt auch während des automatischen Steigvorgangs treppab, ein Zurückziehen der Treppensteigvorrichtung grundsätzlich möglich ist. Wird jedoch hierbei durch die Sensoren, insbesondere durch den vorderen Sensor 1, erkannt, dass die Treppensteigvorrichtung keine für eine sichere Fortführung des Steigvorgangs treppab geeignete Position aufweist, nämlich insbesondere dann, wenn die Treppensteigvorrichtung zu weit zurückgezogen wurde, so dass der Sensor 1 nicht den großen Abstand zur tiefer liegenden Auftrittsfläche misst, sondern den geringen Abstand zu der Auftrittsfläche, auf der die inneren Laufräder 17b aufliegen, so wird der automatische Steigvorgang unterbrochen. Erst wenn die Treppensteigvorrichtung wieder ordnungsgemäß an die vordere Kante der Stufe herangefahren wurde, wird der Steigvorgang bis zur nächsten Treppenstufe treppab weitergeführt. Bei diesem erneuten Schieben der Treppensteigvorrichtung nach vorne wird ein zu weites Vorschieben der Treppensteigvorrichtung, wie bereits erläutert, durch die auch an den inneren Laufrädern 17b vorgesehenen, in den Figuren nicht dargestellten Tastrollen verhindert.

Die Steuereinrichtung kann so ausgelegt sein, dass ein Unterbrechen des Steigvorgangs dann nicht mehr durchgeführt wird, wenn die äußeren Laufräder 17a bereits eine Position erreicht haben, bei denen ihre tiefste Stelle bereits unterhalb der Auftrittsfläche der oberen Treppenstufe liegt, wie beispielsweise in Fig. 10c dargestellt. In dieser Position ist ein Zurückziehen der Treppensteigvorrichtung nur mit einem erheblichen Kraftaufwand möglich, so dass es sicherer ist, den Steigvorgang so lange fortzusetzen, bis die Laufräder 17 auf der nächsten unteren Stufe wiederum eine Neutralstellung erreicht haben.

Die automatische Start-/Stopp-Funktion bei der Treppauffahrt verläuft grundsätzlich in analoger Weise. Hierzu wird auf die Fig. 11a bis Fig. 11c verwiesen, in denen der Steigvorgang treppauf dargestellt ist. Auch in diesen Figuren ist zum Zwecke der einfacheren Darstellung die Tastrolle 120 des inneren Laufrades 17b nicht gezeigt.

Zunächst wird analog der zuvor beschriebenen Sicherheitsfunktionen eine geeignete Stellung der Treppensteigvorrichtung in Bezug auf die obere Treppenstufe festgestellt. Insbesondere wird ermittelt, dass sich die Treppensteigvorrichtung in einem richtigen Haltewinkel in der Neutralstellung an der Stufenhinterkante befindet. Insbesondere erkennt der Sensor 4 hierbei einen Abstand zu der Auftrittsfläche der oberen Stufe, der erheblich geringer ist als der zuvor genannte Beispielswert von 28 cm. In dem die automatische Start-/Stopp-Funktion erlaubenden Betriebsmodus wird der Steigvorgang automatisch eingeleitet und weitergeführt, wenn und solange diese geeignete Stellung beibehalten wird.

Aus der Information über die Stufenhöhe, die mittels der Sensoren erfasst wird, wird zusätzlich der Aufsetzpunkt der inneren Laufräder 17b errechnet. Dieser Wert stellt die Position dar, in welcher das innere Räderpaar 17b auf der nächsthöheren Stufe aufsetzt.

Mit dem Sensor 3 wird in Abhängigkeit des Haltewinkels der Abstand der Treppensteigvorrichtung zur Auftrittsfläche gemessen. Sollte sich die Treppensteigvorrichtung nicht in einer Stellung befinden, in der die inneren Laufräder 17b sicher auf die Auftrittsfläche der oberen Stufe aufgesetzt werden können, wird der Steigvorgang unterbrochen und erst dann fortgesetzt, wenn die Treppensteigvorrichtung richtig positioniert ist.

Es versteht sich, dass diese Überprüfung auch durch andere oder weitere, hier nicht dargestellte Sensoren verwirklicht oder unterstützt werden kann. Die Überwachung des Abstandes zu der nächsthöheren Stufe ist insbesondere deshalb von Bedeutung, weil die äußeren Laufräder 17a, welche auf der Auftrittsfläche der unteren Stufe aufliegen, während dieser Phase der Steigbewegung nicht gegen ein Vorrollen gesichert sind, da die Tastrollen 120 ebenfalls auf dieser Auftrittsfläche aufliegen und die Sperrwirkung der Laufräder 17a in Vorwärtsrichtung in dieser Position noch nicht aktiviert ist. Sollte daher die Bedienperson die Treppensteigvorrichtung unbeabsichtigt nach vorne schieben, wird auf Grund der erläuterten Überwachung des Abstandes zu der hinteren beziehungsweise höheren Stufe eine Fehlfunktion vermieden.

Es besteht die Möglichkeit, einem Start-/Stopp-Taster eine Sicherheitsfunktion zuzuweisen, die es ermöglicht, beim Berühren dieses Tasters eine Unterbrechung des automatischen Steigvorgangs zu bewirken. Es besteht zudem die Möglichkeit, dass bei einer erneuten Betätigung dieses Tasters der Steigvorgang in der eingeleiteten Richtung fortgeführt wird.

### ZUSAMMENFASSUNG DER OFFENBARUNG

Die Erfindung betrifft eine Treppensteigvorrichtung mit einer Trägereinheit, einer motorisch angetriebenen Steigeinheit und einer Steuereinheit zum Steuern des Betriebs der Steigeinheit, wobei eine Detektionseinheit zum Detektieren der aktuellen Position der Trägereinheit in Bezug auf eine oder mehrere Stufen der Treppe vorgesehen ist, welche mindestens einen berührungslosen Sensor aufweist, wobei die Detektionseinheit Signale an die Steuereinheit abgibt, die Informationen über die aktuelle Position der Trägereinheit in Bezug auf eine oder mehrere Stufen der Treppe enthalten und wobei die Steuereinheit dazu ausgelegt ist, den Betrieb der Steigeinheit in Abhängigkeit von Signalen der Detektionseinheit zu steuern.

## Patentansprüche

1. Treppensteigvorrichtung, beispielsweise für Rollstühle,
mit einer Trägereinheit (11, 12),
mit einer mit der Trägereinheit (11, 12) verbundenen Steigeinheit,
wobei die Steigeinheit mindestens ein Steigelement (17a, 17b) aufweist, das durch einen Antriebsmotor antreibbar und so ausgebildet ist, dass es mit dem Auftritt der jeweils nächstgelegenen Stufe einer Treppe in Berührung gelangen und die Treppensteigvorrichtung auf die nächstgelegene Stufe heraufheben oder absenken kann, und
mit einer Steuereinheit zum Steuern des Betriebs der Steigeinheit,
**gekennzeichnet durch**
eine Detektionseinheit zum Detektieren der aktuellen Position der Trägereinheit (11, 12) in Bezug auf eine oder mehrere Stufen der Treppe, wobei die Detektionseinheit mindestens einen berührungslosen Sensor aufweist,
wobei die Detektionseinheit Signale an die Steuereinheit abgibt, die Informationen über die aktuelle Position der Trägereinheit (11, 12) in Bezug auf eine oder mehrere Stufen der Treppe enthalten, und
wobei die Steuereinheit dazu ausgelegt ist, den Betrieb der Steigeinheit in Abhängigkeit von Signalen der Detektionseinheit zu steuern.

2. Vorrichtung nach Anspruch 1, **dadurch gekennzeichnet, dass** die Steuereinheit dazu ausgelegt ist, in Abhängigkeit von Signalen der Detektionseinheit die Einleitung oder Fortführung des Steigvorgangs zu verhindern und/oder den Steigvorgang zu unterbrechen.

3. Vorrichtung nach einem der vorstehenden Ansprüche, **dadurch gekennzeichnet, dass** die Steuereinheit dazu ausgelegt ist, in Abhängigkeit von Signalen der Detektionseinheit eine Einleitung oder Fortführung des Steigvorgangs zuzulassen und/oder eine Steigrichtung selbsttätig zu erkennen und/oder eine Einleitung des Steigvorgangs selbsttätig auszulösen.

4. Vorrichtung nach einem der vorstehenden Ansprüche, **dadurch gekennzeichnet, dass** die Steuereinheit dazu ausgelegt ist, die Betätigungsgeschwindigkeit der Steigeinheit in Abhängigkeit von Signalen der Detektionseinheit zu steuern.

5. Vorrichtung nach einem der vorstehenden Ansprüche, **dadurch gekennzeichnet, dass** die Steuereinheit dazu ausgelegt ist, die Betätigungsrichtung der Steigeinheit in Abhängigkeit von Signalen der Detektionseinheit umzukehren.

6. Vorrichtung nach einem der vorstehenden Ansprüche, **dadurch gekennzeichnet, dass** die Detektionseinheit mindestens drei, vorzugsweise vier berührungslose Sensoren aufweist.

7. Vorrichtung nach einem der vorstehenden Ansprüche, **dadurch gekennzeichnet, dass** die berührungslosen Sensoren in einem zentralen Bereich der Trägereinheit (11, 12) angebracht sind.

8. Vorrichtung nach Anspruch 7, **dadurch gekennzeichnet, dass** ein erster berührungsloser Sensor (IR1) im vorderen Bereich der Trägereinheit (11, 12) angeordnet ist und seine Detektionsrichtung vertikal nach unten verläuft, ein berührungsloser Sensor (IR1) an der Unterseite der Trägereinheit (11, 12) angeordnet ist und seine Detektionsrichtung horizontal verläuft und ein dritter berührungsloser Sensor (IR4) im hinteren Bereich der Trägereinheit (11, 12) angeordnet ist und seine Detektionsrichtung vertikal nach unten verläuft.

9. Vorrichtung nach Anspruch 8, **dadurch gekennzeichnet, dass** ein vierter berührungsloser Sensor (IR3) im hinteren Bereich der Trägereinheit (11, 12) angeordnet ist und seine Detektionsrichtung vertikal nach unten verläuft, wobei der vierte berührungslose Sensor (IR3) unterhalb und vor dem dritten berührungslosen Sensor (IR4) angeordnet ist.

10. Vorrichtung nach einem der vorstehenden Ansprüche, **dadurch gekennzeichnet, dass** die Detektionseinheit einen Neigungswinkelsensor umfasst.

11. Vorrichtung nach einem der vorstehenden Ansprüche, **dadurch gekennzeichnet, dass** die Detektionseinheit Tastrollen umfasst.

12. Vorrichtung nach einem der vorstehenden Ansprüche, **dadurch gekennzeichnet, dass** die Detektionseinheit einen Lagebestimmung-Sensor zum Erfassen einer bestimmten Lage des Steigelements (17a, 17b) umfasst.

13. Vorrichtung nach einem der vorstehenden Ansprüche, **dadurch gekennzeichnet, dass** die Detektionseinheit einen Zähl-Sensor zum Zählen der Umdrehungen des Antriebsmotors aufweist.

14. Vorrichtung nach Anspruch 13, soweit dieser auf Anspruch 12 rückbezogen ist, **dadurch gekennzeichnet, dass** die Steuereinrichtung dazu ausgelegt ist, aus den Signalen des Lagebestimmung-Sensors und des Zähl-Sensors die momentane Lage des Steigelements (17a, 17b) zu ermitteln.

15. Vorrichtung nach einem der vorstehenden Ansprüche, **dadurch gekennzeichnet, dass** die Steigeinheit zwei als Steigelemente (17a, 17b) fungierende Laufradpaare, deren beide Laufräder gegenüber der Trägereinheit (11, 12) um eine parallel zu ihrer Mittelachse verlaufende Welle verschwenkbar gelagert sind, aufweist.
